# FASCICULE DE BREVET EUROPEEN

(11) **EP 2 375 502 B1**
(45) Date de publication et mention de la délivrance du brevet: **17.12.2014**
(21) Numéro de dépôt: 11161279.2
(22) Date de dépôt: 06.04.2011
(51) Int. Cl.: H01R 4/36, F16B 31/02, H01R 101/00

(54) **Dispositif de serrage à tête sécable pour manchon de raccord électrique**
Einspannvorrichtung mit teilbarem Kopf für elektrischen Anschlussschaft
Clamping device with divisible head for an electric connection sleeve

(30) Priorité: 06.04.2010 FR 1052569
(43) Date de publication de la demande: 12.10.2011
(73) Titulaire: Soreca, 38430 Moirans (FR)
(72) Inventeur: Sauër, Eric, 38430 MOIRANS (FR)
(74) Mandataire: de Beaumont, Michel

(56) Documents cités:
- EP-A1- 1 953 397
- EP-A2- 1 833 117
- GB-A- 2 443 001

## Description

### Domaine de l'invention

La présente invention concerne de façon générale les raccords de câble électrique et, plus particulièrement, les manchons destinés à raccorder deux câbles dans des applications de basse tension (inférieure à 1 000 volts), de moyenne tension (de l'ordre de 1 000 à 50 000 volts) et de haute tension (supérieure à 50 000 volts). L'invention concerne plus précisément un dispositif de serrage mécanique d'une extrémité d'un câble dans un tel manchon.

### Exposé de l'art antérieur

Les manchons ou raccords électriques sont destinés à coupler deux extrémités de câbles bout-à-bout. Chaque extrémité est tenue dans le manchon au moyen de vis de serrage transversales par rapport à l'axe du manchon.

Dans les applications de raccordement en souterrain, il est important qu'une fois le raccord effectué, aucune arête ne soit saillante par rapport au manchon de façon à éviter les effets de pointe qui risqueraient de créer des arcs électriques. Pour cela, on a souvent recours à des vis de serrage sécables qui sont destinées à se sectionner au ras d'un alésage du manchon. La tête est ainsi éliminée et ne subsiste que la partie de la vis servant à serrer le câble. Un manchon est alors dédié à un diamètre de câble donné de façon à ce que la vis sécable correspondante se casse à la bonne hauteur.

On a déjà proposé des vis sécables à différentes hauteurs. Ces vis sont alors étagées avec des couples d'arrachage croissants. Un problème est que si la vis casse à un mauvais niveau, elle risque de dépasser quand même du manchon.

On a également déjà proposé des vis sans tête formant une partie de manche vissable avec un outil mâle. On pourrait penser réaliser des vis de ce type de différentes hauteurs, adaptées aux différents diamètres de câble. Toutefois, les vis doivent être pré-montées au manchon afin d'éviter que l'opérateur ne les perde.

Le document EP 1833117 A décrit une vis à tête sécable associée à une douille et prévoit que la vis puisse se rompre à deux hauteurs différentes selon sa profondeur d'enfoncement dans un manchon. La douille comporte un épaulement en appui contre un alésage du manchon.

Le document EP 1953397 A décrit une vis à tête sécable dont une âme est engagée dans un corps cylindrique.

Le document GB 2443001 A décrit un boulon comportant un corps cylindrique et une vis en deux parties vissable l'une dans l'autre.

Il serait souhaitable de disposer d'un système de raccordement pour câble électrique qui puisse s'adapter à différents diamètres de câble et qui soit simple d'utilisation.

### Résumé

Un objet d'un mode de réalisation de la présente invention est de proposer un dispositif de serrage à vis sécable qui pallie tout ou partie des inconvénients des dispositifs connus.

Un autre objet d'un mode de réalisation de la présente invention est de proposer un tel dispositif qui évite tout risque de casse de la vis à une mauvaise hauteur.

Un autre objet d'un mode de réalisation de la présente invention est de proposer une solution compatible avec un vissage au moyen d'un outil mâle ou d'un outil femelle.

Pour atteindre tout ou partie de ces objets ainsi que d'autres, il est prévu un dispositif de serrage pour câble électrique selon la revendication 1. Le dispositif de serrage pour câble électrique, comportant : une douille ouverte à ses deux extrémités et pourvue d'un filetage externe et d'un taraudage interne ; et une vis dont un corps comporte une portion inférieure au moins partiellement filetée destinée à coopérer avec ledit taraudage de la douille ; dont une bague sécable définit un épaulement externe ; et dont une zone sécable sépare le corps d'une tête de la vis, ledit filetage de la douille étant destiné à coopérer avec un alésage perpendiculaire à l'axe du câble, la hauteur de la douille étant inférieure à la hauteur dudit alésage.

Selon un mode de réalisation de la présente invention, ledit épaulement est destiné à coopérer avec la douille pour autoriser un vissage de la douille par une action sur la tête de la vis.

Selon un mode de réalisation de la présente invention, le diamètre externe de la bague est compris entre les diamètres interne et externe de la douille.

Selon un mode de réalisation de la présente invention, la zone sécable est en dessous de la bague.

Selon un mode de réalisation de la présente invention, la zone sécable est au dessus de la bague.

Selon un mode de réalisation de la présente invention, le diamètre interne de la bague est supérieur au diamètre d'une portion inférieure de la tête.

Selon un mode de réalisation de la présente invention, une portion inférieure de la tête est lisse.

Selon un mode de réalisation de la présente invention, la tête de la vis comporte une portion supérieure adaptée à au moins un outil de vissage.

On prévoit également un système de raccordement d'au moins une extrémité d'un câble, comportant :
un manchon cylindrique destiné à recevoir au moins ladite extrémité du câble et pourvu d'au moins un alésage radial ; et
au moins un dispositif de serrage.

Selon un mode de réalisation de la présente invention, le diamètre de la douille du dispositif de serrage est adapté au diamètre de l'alésage radial du manchon et est supérieur au diamètre d'un logement cylindrique du manchon destiné à recevoir l'extrémité du câble.

Selon un mode de réalisation de la présente invention, la hauteur de l'alésage est supérieure au rayon du manchon.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue en perspective d'un manchon de raccordement électrique du type auquel s'applique la présente invention ;
la figure 2 est une vue en perspective d'une vis sécable d'un mode de réalisation de dispositif de serrage ;
la figure 3 est une vue en perspective d'une douille d'un mode de réalisation de dispositif de serrage ;
la figure 4 est une vue en coupe longitudinale de la vis de la figure 2 ;
la figure 5 est une vue en coupe longitudinale du dispositif de serrage pré-assemblé ;
la figure 6 est une vue en coupe d'un manchon de raccordement de câbles électriques illustrant le fonctionnement du dispositif de serrage de la figure 5 ;
la figure 7 est une autre vue en coupe du manchon et des câbles de la figure 6 illustrant le fonctionnement du dispositif de serrage de la figure 5 ;
la figure 8 est une vue en perspective d'un autre mode de réalisation d'une vis d'un dispositif de serrage ;
la figure 9 est une vue en coupe de la vis de la figure 8 ;
la figure 10 est une vue en perspective d'un manchon de raccordement et de câbles une fois serrés ; et
la figure 11 est une vue en coupe d'un manchon de raccordement pré-équipé de dispositifs de serrage.

### Description détaillée

De mêmes éléments ont été désignés par de mêmes références aux différentes figures. Par souci de clarté, seuls les éléments utiles à la compréhension de l'invention ont été représentés et seront décrits. De plus, l'invention sera décrite par la suite en relation avec un exemple d'application à un manchon de serrage pour câbles électriques. Elle s'applique toutefois plus généralement à tout dispositif de serrage de câbles, par exemple, une cosse de raccordement.

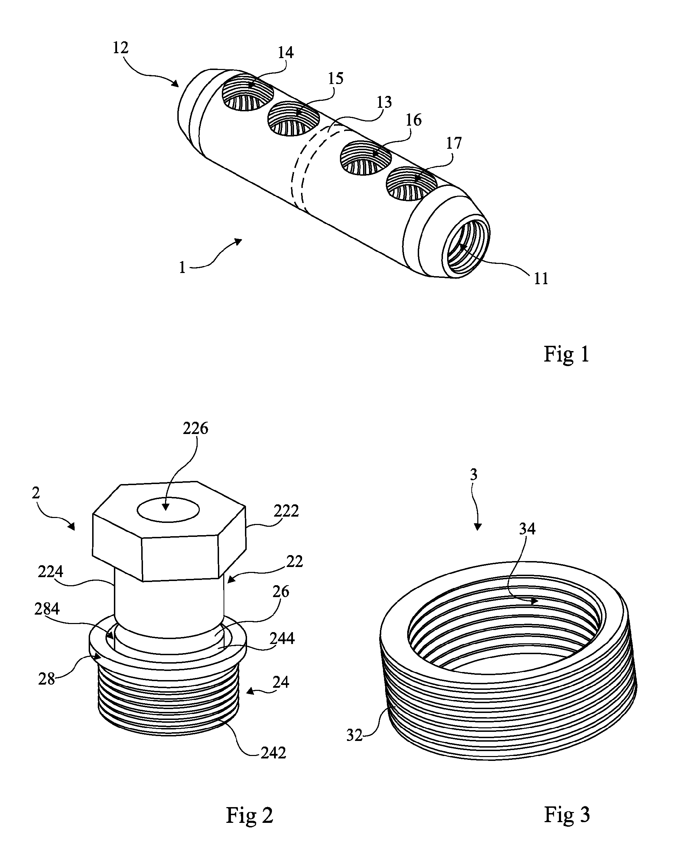

La figure 1 est une vue en perspective d'un manchon destiné à raccorder deux extrémités de câbles (non représentées) entre-elles. Ce manchon en un matériau conducteur est de forme générale cylindrique et définit deux logements 11 et 12, séparés par une cloison centrale 13 et ouverts aux extrémités du manchon. Dans cet exemple, le manchon comporte quatre alésages taraudés 14, 15, 16 et 17 (deux par logement) dans une direction transversale à l'axe du manchon. Ces alésages sont destinés à recevoir des éléments de serrage des extrémités des câbles. Les alésages 14 à 17 ont leurs axes respectifs parallèles entre eux selon une direction radiale du cylindre.

Le diamètre des alésages 14 à 17 est supérieur au diamètre des logements cylindriques 11 et 12. Par conséquent, les alésages peuvent être taraudés jusqu'au fond des logements.

La figure 2 est une vue en perspective d'un mode de réalisation d'une vis 2 sécable d'un dispositif de serrage.

La figure 3 est une vue en perspective d'un mode de réalisation d'une douille du dispositif de serrage.

La vis 2 comporte une tête 22 dont une portion supérieure 222 est adaptée à coopérer avec un ou plusieurs types d'outils de serrage, la tête étant destinée à être éliminée après blocage. Dans l'exemple de la figure 2, on suppose que la portion supérieure 222 de tête 22 est adaptée à coopérer avec une clé à douille. Il s'agit là d'un exemple et la tête 22 pourra être adaptée à d'autres types d'outillage.

La tête 22 est reliée par une portion inférieure lisse 224 à un corps 24 de la vis par une portion sécable 26. La portion sécable 26 est, par exemple, constituée d'une rainure annulaire en biseau créant une zone de fragilité à une hauteur choisie. La tête comporte axialement un puits 226 dont le diamètre conditionne le couple à la rupture en définissant l'épaisseur de matière au niveau de la portion sécable 26.

Dans cet exemple, le corps 24 comporte une portion supérieure lisse 244 et une portion inférieure 242 pourvue d'un filetage externe, de préférence sur toute sa hauteur. Enfin, une bague sécable 28 est présente au niveau de la portion lisse 244 du corps, et définit un épaulement externe 286 de diamètre supérieur au diamètre externe du filetage 242 et inférieur au diamètre externe de la douille 3 (figure 3).

La douille annulaire 3 est ouverte à ses deux extrémités et forme un fourreau présentant un filetage externe 32 sur toute sa hauteur et un filetage interne 34 également sur toute sa hauteur. Le filetage 34 est destiné à coopérer avec le filetage externe 242 du corps 24 de la vis 2. Le filetage externe 32 est destiné à coopérer avec un des taraudages 14, 15, 16 et 17 du manchon 1 (figure 1).

La douille 3 et toutes les parties de la vis, à l'exception de la portion 222 adaptée à un outillage, sont de révolution circulaire. De préférence, les portions 224 de la tête et 244 du corps sont de même diamètre pour permettre à la bague 28 de remonter le long de la tête comme on le verra par la suite. Le diamètre des portions 224 et 244 est inférieur au diamètre de la portion filetée 242 et, de préférence, de la portion supérieure de la tête. On notera que l'on désigne par vis un élément ayant une forme générale de boulon dans la mesure où son extrémité libre est dépourvue de pointe pour ne pas endommager le câble.

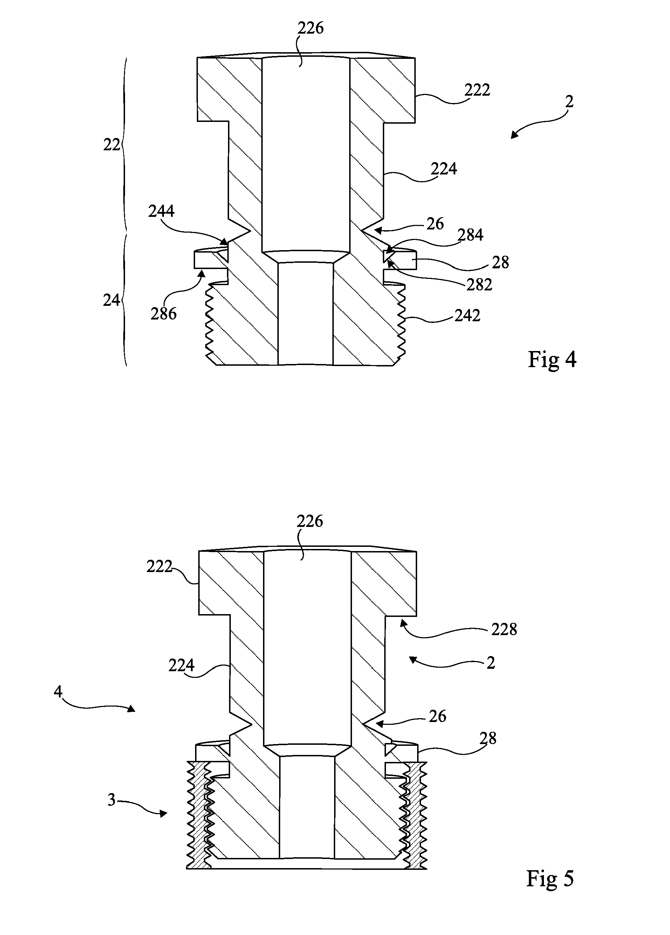

La figure 4 est une vue en coupe longitudinale de la vis 2, sur laquelle apparaissent mieux les relations entres les différents diamètres.

La bague 28 est rendue sécable, par exemple par usinage d'une gorge annulaire 284 laissant subsister une liaison sécable 282. La gorge 284 est dimensionnée de telle sorte qu'une fois la bague 28 détachée du corps 24, la bague 28 présente un diamètre interne tel qu'elle peut coulisser, de préférence avec frottement, sur les portions 244 et 224. La forme interne de la bague est de préférence conique. Son diamètre interne minimal est de préférence supérieur au diamètre de la portion 224.

Dans le mode de réalisation représenté, les portions 224 et 244 sont lisses. En variante, elles pourront être filetées pourvu que la bague (le cas échéant alors taraudée) puisse remonter vers la tête.

La figure 5 est une vue en coupe longitudinale du dispositif de serrage 4 pré-monté, c'est-à-dire de la vis 2 pré-positionnée avec la douille 3.

Comme il ressort plus particulièrement de la figure 5, la bague sécable 28 définit, par sa face inférieure, une butée temporaire pour la douille 3. De préférence, la partie supérieure 222 de la tête 22 définit par rapport à sa partie inférieure 224, un épaulement 228 de façon à retenir la bague 28 lorsqu'elle est détachée du corps 24 comme on le verra par la suite.

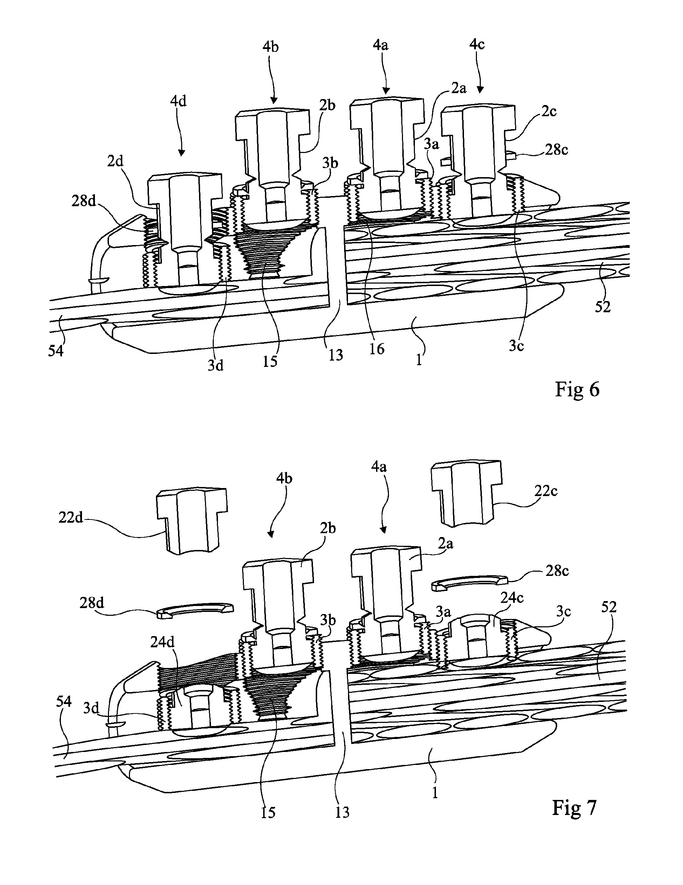

Les figures 6 et 7 sont des coupes longitudinales d'un manchon 1 associé à des dispositifs de serrage 4, illustrant le fonctionnement de ces dispositifs.

Pour faire ressortir qu'un même dispositif de serrage est adapté à différents diamètres de câbles, on suppose l'assemblage de câbles 52 et 54 ayant des diamètres différents. On notera toutefois que, le plus souvent, les deux câbles de part et d'autre du manchon peuvent être de même diamètre. Les références des différents dispositifs de serrage 4 sont affectées d'un indice a à d pour les distinguer dans leur position, arbitrairement a et b au centre et c et d aux extrémités, mais ces dispositifs 4a, 4b, 4c et 4d sont tous identiques.

Comme l'illustrent les positions des dispositifs de serrage 4a et 4b des alésages 15 et 16 proximaux de la paroi 13 aux figures 6 et 7, chaque dispositif est, de préférence, pré-monté dans l'alésage à une profondeur telle que l'intégralité du diamètre interne du manchon 1 reste libre.

Comme l'illustre la figure 6, une fois les câbles 52 et 54 engagés (ou un câble après l'autre), le vissage du dispositif 4 par l'intermédiaire de sa portion 222 provoque sa descente (douille + vis) jusqu'à ce que la face inférieure de la douille (3c et 3d) appuie sur la surface du câble (position illustrée par les dispositifs 4c et 4d). En poursuivant le vissage, on provoque le compactage du câble, généralement formé de plusieurs brins, puis à un couple déterminé, la rupture de la liaison 282 de la bague (28c ou 28d) au corps 24 de la vis 2. La vis (2c ou 2d) peut alors descendre par coopération du filetage 242 avec le taraudage 34 dans la douille jusqu'à ce que son extrémité inférieure appuie sur le câble. Lors du serrage, la vis poinçonne le câble. En variante, la partie inférieure de la vis pourra être associée à un patin d'appui usuel (non représenté) dont le rôle est de procurer un appui sur le câble sans rotation.

Comme l'illustre la figure 7, en poursuivant le vissage alors que le corps 24 de la vis 2 porte sur le câble, on provoque la séparation de la tête (22c ou 22d) de la vis par rapport au corps (24c ou 24d) par rupture de la zone sécable 26. La tête 22 de la vis est alors libérée de même que la bague 28. En figure 7, les bagues 28c et 28d ont été représentées libres par rapport aux têtes 22c et 22d. On notera toutefois que, de préférence, la bague 28 reste autour de la portion 224 de la tête. Il n'est en effet pas souhaitable que la bague retombe dans l'alésage où, en se plaçant de travers, elle risque de provoquer un effet de pointe. De plus, il n'est de façon générale pas souhaitable que, une fois le serrage terminé, des éléments métalliques restent à proximité des manchons afin d'éviter des arcs électriques une fois les câbles alimentés. Le fait que la bague 28 reste autour de la tête facilite donc les opérations du monteur.

Il ressort des figures 6 et 7 qu'une fois le serrage terminé, les parties restantes des dispositifs de serrage s'inscrivent dans le cylindre du manchon et ne créent donc pas d'effet de pointe. Il ressort par ailleurs qu'un même dispositif de serrage peut être utilisé pour différents diamètres de câbles grâce aux douilles 3 qui, en quelque sorte, prolongent les alésages du manchon. La présence de la douille 3 permet à la vis 2 de descendre dans les alésages en dessous de la génératrice du manchon, ce qui permet de serrer des câbles ayant des diamètres compris entre la moitié du diamètre interne du manchon et la valeur du diamètre interne du manchon. Comme le diamètre des alésages 14 à 17 est supérieur au diamètre des logements 11 et 12, les alésages peuvent être taraudés sur toute leur hauteur et les douilles 3 peuvent descendre, théoriquement, jusqu'au fond du logement (à l'opposé de l'ouverture de l'alésage). Prévoir des taraudages jusqu'au fond améliore la tenue de la douille donc de la vis. En variante, les taraudages s'arrêtent avant le fond, pourvu de dépasser le génératrice du cylindre pour permettre à la douille de descendre suffisamment profond et autoriser ainsi le serrage de câble de différents diamètres, y compris de diamètre inférieur au rayon du manchon.

Pour pouvoir utiliser un même manchon avec le plus large éventail de diamètres de câbles, les dispositifs de serrage associés à ce manchon respectent préférentiellement les dimensions suivantes :
la hauteur de la douille 3 est inférieure à la hauteur des alésages du manchon 1 ; et
la hauteur de la portion filetée 242 de la vis est inférieure à la hauteur des alésages du manchon.

Les résistances à la rupture des zones sécables 26 et 282 sont choisies pour que la liaison de la bague 28 casse en premier de façon à ce que la vis 2 puisse descendre dans la douille 3, puis que la tête de vis se sépare ultérieurement à une résistance supérieure.

A titre d'exemple particulier de réalisation, la résistance à la rupture de la liaison 282 de la bague 28 est de l'ordre de 35 newtons et la force à appliquer pour rompre la liaison 26 de la tête de la vis à son corps est de l'ordre de 45 newtons.

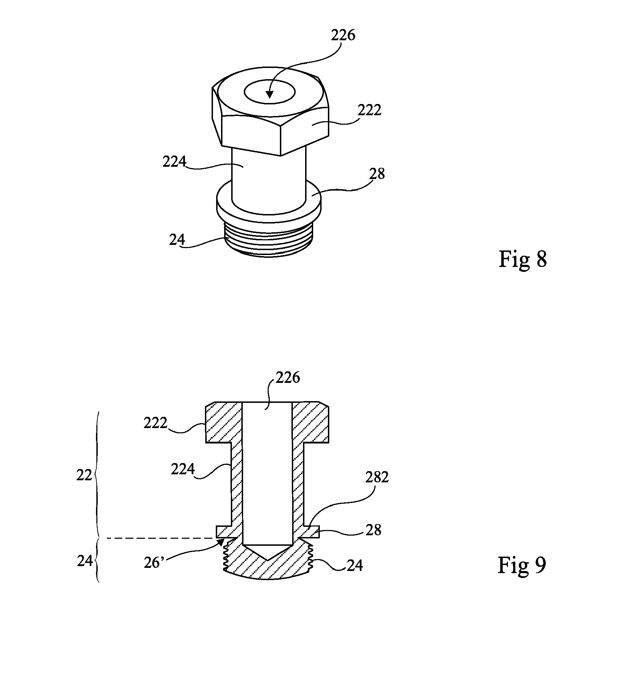

La figure 8 est une vue en perspective d'un autre mode de réalisation d'une vis adaptée à coopérer avec le manchon et la douille décrits précédemment.

La figure 9 est une vue en coupe de la vis de la figure 8.

Par rapport au mode de réalisation des figures 2 et 4 où une première zone de rupture est définie par la gorge 284 et où une deuxième zone de rupture est définie par la gorge 26 au dessus de la bague 28, la deuxième zone de rupture est ici définie par une gorge 26', sous la bague 28. De plus, la première zone de rupture est définie par l'épaisseur de la bague 28 par rapport à l'épaisseur du cylindre de la vis (sans gorge 284). Le corps 24 de la vis est ici intégralement fileté.

Le mode de réalisation des figures 8 et 9 permet de prévoir un couple de résistance à la rupture supérieur pour la première zone par rapport à la seconde. En effet, la gorge 26' n'est pas sollicitée pendant le pré-serrage grâce à l'appui de la couronne sur la douille 3.

Selon un mode de réalisation préféré, les vis sont réalisées par usinage d'une seule pièce au cours duquel les zones des ruptures sont également formées. Les dimensions et formes à donner aux zones de rupture sont à la portée de l'homme du métier à partir des indications données ci-dessus.

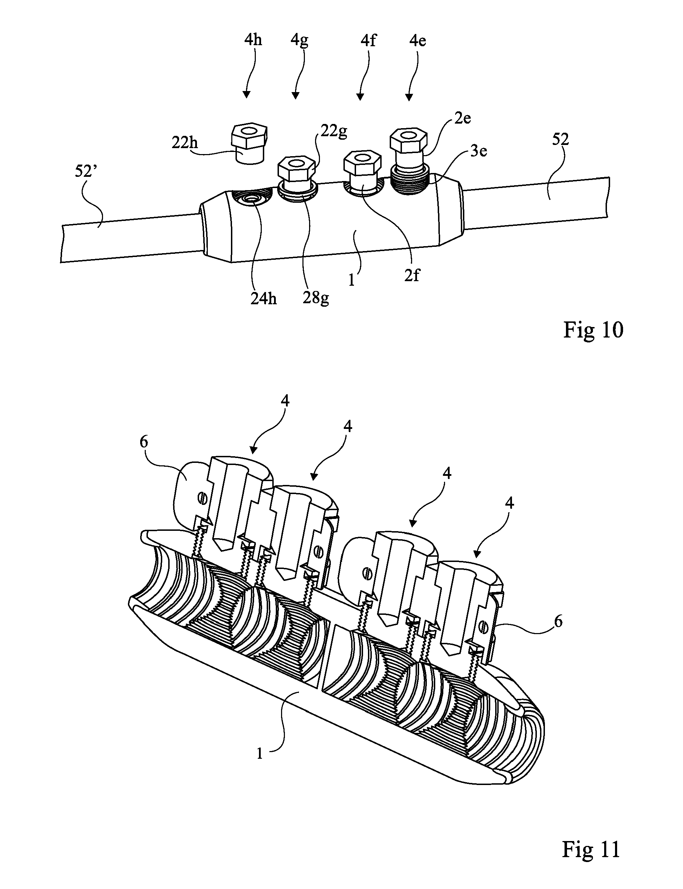

La figure 10 est une vue en perspective illustrant un montage d'un manchon pour relier deux câbles 52 et 52' de même diamètre. Les dispositifs de serrage 4 ont été illustrés à différentes étapes du serrage de droite à gauche dans l'orientation de la figure (en les désignant par des indices e à h) depuis l'introduction du dispositif 4e, son début d'enfoncement (dispositif 4f), la rupture de la bague 28 (dispositif 4g) et la séparation de la tête 22 de vis (dispositif 4h).

La figure 11 est une vue en perspective et en coupe illustrant un exemple de pré-assemblage d'un manchon 1 et de quatre dispositifs de serrage 2. Un tel pré-montage est généralement prévu pour faciliter l'utilisation par les opérateurs. Les dispositifs de serrage 4 sont maintenus temporairement deux à deux par des fourreaux 6 en matière plastique qui se cassent aisément lorsque l'opérateur commence à serrer. D'autres systèmes de pré-montage pourront être envisagés. La figure 11 fait également apparaître que les alésages du manchon dépassent préférentiellement l'axe de celui-ci. Cela permet le serrage de câbles de petit diamètre en autorisant une prise des douilles 3 par vissage dans la partie inférieure du manchon.

Divers modes de réalisation ont été décrits, diverses variantes et modifications apparaitront à l'homme de l'art. En particulier, les diamètres respectifs des douilles 3 et des vis 2 des dispositifs de serrage pourront être modifiés en fonction du diamètre de poinçonnage souhaité dans les câbles.

De plus, les dimensions respectives à donner aux manchons, aux douilles et aux vis des dispositifs de serrage sont à adapter en fonction des familles de diamètres de câbles auxquels ils sont destinés et ces adaptations sont à la portée de l'homme du métier à partir des indications fonctionnelles données ci-dessus. Le corps de la vis et la tête de la vis ont été représentés creux, mais le corps et/ou la tête peuvent être pleins. La profondeur de la gorge 26 ou 26' est adaptée à l'épaisseur de matière subsistante souhaitée en fonction de la résistance à la rupture souhaitée pour séparer la tête du corps.

Enfin, bien que l'invention ait été décrite en relation avec un exemple d'application à un manchon d'assemblage bout-à-bout de deux extrémités de câbles, elle s'applique plus généralement à tout système de serrage d'un câble électrique. Par exemple, l'invention pourra être mise en oeuvre pour réaliser le dispositif de serrage d'une cosse de raccordement d'une extrémité d'un câble. Dans un tel cas, la cosse comporte généralement une portion en manchon cylindrique conducteur (le cas échéant isolé extérieurement) pour recevoir l'extrémité du câble, et un élément de raccordement à un bornier, par exemple un oeillet conducteur.

## Revendications

1. Dispositif de serrage (4) pour câble électrique (52, 54 ; 52, 52'), comportant :
une douille (3) ouverte à ses deux extrémités et pourvue d'un filetage externe (32) et d'un taraudage interne (34) ; et
une vis (2) dont un corps (24) comporte une portion inférieure au moins partiellement filetée (242) destinée à coopérer avec ledit taraudage de la douille ; dont une bague (28) définit un épaulement externe (286) ; et dont une zone sécable (26, 26') sépare le corps d'une tête (22) de la vis,
ledit filetage (32) de la douille (3) est destiné à coopérer avec un alésage (14, 15, 16, 17) perpendiculaire à l'axe du câble (52, 54 ; 52, 52'), la hauteur de la douille (3) étant inférieure à la hauteur dudit alésage **caractérisé en ce que** la bague (28) est sécable.

2. Dispositif selon la revendication 1, dans lequel ledit épaulement (286) est destiné à coopérer avec la douille (3) pour autoriser un vissage de la douille par une action sur la tête (22) de la vis (2).

3. Dispositif selon la revendication 1 ou 2, dans lequel le diamètre externe de la bague (28) est compris entre les diamètres interne et externe de la douille (3).

4. Dispositif selon l'une quelconque des revendications 1 à 3, dans lequel la zone sécable (26') est en dessous de la bague (28).

5. Dispositif selon l'une quelconque des revendications 1 à 3, dans lequel la zone sécable (26) est au dessus de la bague (28).

6. Dispositif selon l'une quelconque des revendications 1 à 5, dans lequel le diamètre interne minimal de la bague (28) est supérieur au diamètre d'une portion inférieure (224) de la tête (22).

7. Dispositif selon l'une quelconque des revendications 1 à 6, dans lequel une portion inférieure (224) de la tête (22) est lisse.

8. Dispositif selon l'une quelconque des revendications 1 à 7, dans lequel la tête (22) de la vis (2) comporte une portion supérieure (222) adaptée à au moins un outil de vissage.

9. Système de raccordement d'au moins une extrémité d'un câble (52, 54 ; 52, 52'), comportant :
un manchon cylindrique (1) destiné à recevoir au moins ladite extrémité du câble et pourvu d'au moins un alésage (14, 15, 16, 17) radial ;
caractérisé en que qu'il comporte au moins un dispositif de serrage (4) conforme à l'une quelconque des revendications précédentes.

10. Système selon la revendication 9, dans lequel le diamètre de la douille (3) du dispositif de serrage est adapté au diamètre de l'alésage radial (14, 15, 16, 17) du manchon (1) et est supérieur au diamètre d'un logement cylindrique (11, 12) du manchon destiné à recevoir l'extrémité du câble.

11. Système selon la revendication 9 ou 10, dans lequel la hauteur de l'alésage (14, 15, 16, 17) est supérieure au rayon du manchon (1).

## Patentansprüche

1. Klemmvorrichtung (4) für ein elektrisches Kabel (52, 54; 52, 52'), welche folgendes aufweist:
einen Sockel (3), der an seinen beiden Enden offen ist, und mit einem Außengewinde (32) und einem Innengewinde (34) versehen ist; und
eine Schraube (2) mit einem Körper (24), die einen zumindest teilweise mit Gewinde versehenen unteren Teil (242) aufweist, der vorgesehen ist, um mit dem Innengewinde des Sockels zusammenzuarbeiten; mit einem Ring (28), der eine externe Schulter (286) definiert; und die einen Abrissbereich (26, 26') hat, der den Körper von einem Kopf (22) der Schraube trennt,
wobei das Außengewinde (32) des Sockels (3) dafür vorgesehen ist, um mit einer Bohrung (14, 15, 16, 17) senkrecht zur Achse des Kabels (52, 54; 52, 52') zusammenzuarbeiten, wobei die Höhe des Sockels (3) kleiner ist als die Höhe der Bohrung,
**dadurch gekennzeichnet, dass** der Ring (28) abgerissen werden kann.

2. Vorrichtung nach Anspruch 1, wobei der Absatz (286) dafür vorgesehen ist, um mit dem Sockel (3) zusammenzuarbeiten, um zu gestatten, dass der Sockel durch eine Einwirkung auf den Kopf (22) der Schraube (2) geschraubt wird.

3. Vorrichtung nach Anspruch 1 oder 2, wobei der Außendurchmesser des Rings (28) zwischen dem Innendurchmesser und dem Außendurchmesser des Sockels (3) liegt.

4. Vorrichtung nach einem der Ansprüche 1 bis 3, wobei der Abrissbereich (26') unter dem Ring (28) gelegen ist.

5. Vorrichtung nach einem der Ansprüche 1 bis 3, wobei der Abrissbereich (26) über dem Ring (28) gelegen ist.

6. Vorrichtung nach einem der Ansprüche 1 bis 5, wobei der minimale Innendurchmesser des Rings (28) größer ist als der Durchmesser eines unteren Teils (224) des Kopfes (22).

7. Vorrichtung nach einem der Ansprüche 1 bis 6, wobei ein unterer Teil (224) des Kopfes (22) glatt ist.

8. Vorrichtung nach einem der Ansprüche 1 bis 7, wobei der Kopf (22) der Schraube (2) einen oberen Teil (222) aufweist, der an mindestens ein Schraubwerkzeug angepasst ist.

9. System zum Verbinden von mindestens einem Ende eines Kabels (52, 54; 52, 52'), welches folgendes aufweist:
eine zylindrische Hülse (1), die vorgesehen ist, um zumindest das Ende des Kabels aufzunehmen und die mit mindestens einer radialen Bohrung (14, 15, 16, 17) versehen ist;
**dadurch gekennzeichnet, dass** sie zumindest eine Klemmvorrichtung (4) nach einem der vorhergehenden Ansprüche aufweist.

10. System nach Anspruch 9, wobei der Durchmesser des Sockels (3) der Klemmvorrichtung an den Durchmesser der radialen Bohrung (14, 15, 16, 17) der Hülse (1) angepasst ist und größer ist als der Durchmesser einer zylindrischen Aufnahme (11, 12) der Hülse, die vorgesehen ist, um das Ende des Kabels aufzunehmen.

11. System nach Anspruch 9 oder 10, wobei die Höhe der Bohrung (14, 15, 16, 17) größer ist als der Radius der Hülse (1).

## Claims

1. A clamping device (4) for an electric cable (52, 54; 52, 52'), comprising:
a socket (3) open at its two ends and provided with an external thread (32) and with an internal thread (34); and
a screw (2) having a body (24) comprising an at least partially threaded lower portion (242) intended to cooperate with said internal thread of the socket; having a ring (28) defining an external shoulder (286); and having a snap-off area (26, 26') separating the body from a head (22) of the screw,
wherein said external thread (32) of the socket (3) is intended to cooperate with a bore (14, 15, 16, 17) perpendicular to the axis of the cable (52, 54; 52, 52'), the height of the socket (3) being smaller than the height of said bore, **characterized in that** the ring (28) is capable of being snapped off.

2. The device of claim 1, wherein said shoulder (286) is intended to cooperate with the socket (3) to allow a screwing of the socket by an action on the head (22) of the screw (2).

3. The device of claim 1 or 2, wherein the external diameter of the ring (28) ranges between the internal and external diameters of the socket (3).

4. The device of any of claims 1 to 3, wherein the snap-off area (26') is located under the ring (28).

5. The device of any of claims 1 to 3, wherein the snap-off area (26) is located above the ring (28).

6. The device of any of claims 1 to 5, wherein the minimum internal diameter of the ring (28) is greater than the diameter of a lower portion (224) of the head (22).

7. The device of any of claims 1 to 6, wherein a lower portion (224) of the head (22) is smooth.

8. The device of any of claims 1 to 7, wherein the head (22) of the screw (2) comprises an upper portion (222) adapted to at least one screwing tool.

9. A system for connecting at least one end of a cable (52, 54; 52, 52'), comprising:
a cylindrical sleeve (1) intended to receive at least said end of the cable and provided with at least one radial bore (14, 15, 16, 17);
**characterized in that** it comprises at least one clamping device (4) of any of the foregoing claims.

10. The system of claim 9, wherein the diameter of the socket (3) of the clamping device is adapted to the diameter of the radial bore (14, 15, 16, 17) of the sleeve (1) and is greater than the diameter of a cylindrical housing (11, 12) of the sleeve intended to receive the end of the cable.

11. The system of claim 9 or 10, wherein the height of the bore (14, 15, 16, 17) is greater than the radius of the sleeve (1).
